# EUROPÄISCHE PATENTSCHRIFT

(11) **EP 3 671 125 B1**
(45) Veröffentlichungstag und Bekanntmachung des Hinweises auf die Patenterteilung: **24.08.2022**
(21) Anmeldenummer: 19213958.2
(22) Anmeldetag: 05.12.2019
(51) Int. Cl.: G01C 21/32, G01C 21/36, G05D 1/02, G06K 9/00

(54) **POSITIONSBESTIMMUNGSSYSTEM UND VERFAHREN ZUM BETREIBEN EINES POSITIONSBESTIMMUNGSSYSTEMS FÜR EINE MOBILE EINHEIT**
POSITION DETERMINING SYSTEM AND METHOD FOR OPERATING A POSITION DETERMINING SYSTEM FOR A MOBILE UNIT
SYSTÈME DE DÉTECTION DE LA POSITION ET PROCÉDÉ DE FONCTIONNEMENT D'UN SYSTÈME DE DÉTECTION DE LA POSITION POUR UNE UNITÉ MOBILE

(30) Priorität: 21.12.2018 DE 102018133461
(43) Veröffentlichungstag der Anmeldung: 24.06.2020
(73) Patentinhaber: Volkswagen AG, 38440 Wolfsburg (DE); MAN Truck & Bus SE, 80995 München (DE)
(72) Erfinder: Wilbers, Daniel, 38440 Wolfsburg (DE); Merfels, Christian, 38102 Braunschweig (DE); Rech, Bernd, 38556 Bokensdorf (DE); Schaper, Thilo, 31275 Lehrte (DE); Koch, Niklas, 38448 Wolfsburg (DE); Jürgens, Stefan, 38106 Braunschweig (DE); Perdomo Lopez, David, 38100 Braunschweig (DE); Hungar, Constanze, 38100 Braunschweig (DE); Wappler, Stefan, 10717 Berlin (DE)
(74) Vertreter: Reitstötter Kinzebach

(56) Entgegenhaltungen:
- WO-A1-2018/017793
- DE-A1-102016 225 631

## Beschreibung

Die vorliegende Erfindung betrifft ein Verfahren zum Betreiben eines Positionsbestimmungssystems für eine mobile Einheit. Sie betrifft ferner ein Positionsbestimmungssystem für eine mobile Einheit.

Viele Fahrfunktionen moderner Fahrzeuge, insbesondere bei zumindest teilweise automatisch gesteuerten Fahrzeugen, setzen eine zuverlässige und genaue Eigenlokalisierung des Fahrzeugs voraus. Hierzu sind verschiedene Konzepte bekannt. Beispielsweise werden Muster und Strukturen in der Fahrzeugumgebung erkannt und mit entsprechenden Eintragungen in einer Karte verglichen. Diese Konzepte setzen voraus, dass die Fahrzeuge mit speziellen Detektoren ausgestattet sind, die aus den Sensorinformationen die Umgebungsmerkmale extrahieren können.

Die US 2010/0176987 A1 schlägt ein Verfahren zum Abschätzen von Position eines Fahrzeugs und erkannter Landmarken vor, bei dem GPS und eine Kamera verwendet werden. Die mittels GPS durchgeführte Navigation wird anhand bekannter Landmarken verbessert, während gleichzeitig neue Landmarken in eine Datenbank aufgenommen werden.

In der EP 2 490 092 A1 wird ein Verfahren zur autarken Lokalisierung eines fahrerlosen motorisierten Fahrzeugs beschrieben, bei dem eine zu befahrende Trajektorie berechnet und bestimmt wird, welche bekannten Landmarken als Lokalisierungshilfe dienen können. Diese Landmarken werden dann während der Bewegung erfasst und verwendet.

Die DE 10 2016 214 028 A1 schlägt ein Verfahren zum Bestimmen einer Position einer mobilen Einheit vor, bei dem Landmarken in der Umgebung einer mobilen Einheit verfolgt werden. Die Position wird anhand eines Partikelfilters aus einer Vielzahl von Hypothesen bestimmt.

Aus der WO 2014/189495 A1 ist ein Verfahren zum simultanen und automatischen Erzeugen einer Datenbank mit Wi-Fi-Informationen bekannt, bei dem Landmarken sowie Wi-Fi-Signale detektiert und zur Lokalisierung genutzt werden. Es können neue Informationen über Positionen und Wi-Fi-Signale zu einer Datenbank hinzugefügt werden.

Die WO 2018/017793 A1 beschreibt ein Verfahren zum Erzeugen, Aktualisieren und Verwenden von Karten, die mittels eines Testfahrzeugs erzeugt worden sind. Bei dem Verfahren wird eine Landmarke anhand eines übertragenen Bildes identifiziert, und die

Karte wird mittels erfasster Bilder, falls erforderlich, aktualisiert. Auf diese Weise wird eine Referenzkarte verbessert.

In der DE 10 2016 225 631 A1 wird ein Verfahren zum Entfernen von zumindest einer Landmarkenposition einer Landmarke in einer Radarkarte beschrieben. Bei dem Verfahren wird auch eine Karte mit Landmarken verbessert, indem in einer Radarkarte mittels einer Laserpunktwolke Landmarken, wie beispielsweise Pfeiler, identifiziert werden. Auf diese Weise wird eine sehr genaue Lokalisierungskarte erzeugt.

Der vorliegenden Erfindung liegt die Aufgabe zugrunde, ein Positionsbestimmungssystem und ein Verfahren zu seinem Betrieb bereitzustellen, die eine möglichst umfassende Nutzung zur Verfügung stehender Informationen über das Umfeld erlauben.

Erfindungsgemäß wird diese Aufgabe durch ein Verfahren mit den Merkmalen des Anspruchs 1 und ein System mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren der eingangs genannten Art werden Kartendaten bereitgestellt, die Positionsinformationen für erste Landmarken eines ersten Landmarkentyps umfassen. Es werden Umgebungsdaten erfasst und eine Position der mobilen Einheit wird bestimmt. Anhand der Position der mobilen Einheit, der erfassten Umgebungsdaten und der Positionsinformationen für die ersten Landmarken werden Trainingsdaten erzeugt und gespeichert. Anhand der Trainingsdaten wird ein erstes Detektormodul zum Detektieren von Landmarken des ersten Landmarkentyps anhand der erfassten Umgebungsdaten erzeugt.

Dadurch ist es vorteilhafterweise möglich, im Fahrzeug stets aktuelle Detektormodule bereitzustellen, ohne hierfür aufwendige Softwareupdates vornehmen zu müssen. Stattdessen können Detektormodule eigenständig erzeugt beziehungsweise gelernt werden.

Insbesondere ist das anhand der Trainingsdaten erzeugte erste Detektormodul dazu eingerichtet, Landmarken des ersten Landmarkentyps zu detektieren. Die mittels des ersten Detektormoduls detektierbaren Landmarken des ersten Landmarkentyps können konkreten ersten Landmarken umfassen, für die bei dem Verfahren bereits Positionsdaten von den Kartendaten umfasst sind und die zum Generieren der Trainingsdaten genutzt wurden. Es können jedoch auch weitere Landmarken des ersten Landmarkentyps erfasst werden, für welche entsprechende Positionsdaten von später bereitgestellten Kartendaten umfasst sind und die zu einem späteren Zeitpunkt zur Positionsbestimmung genutzt werden sollen.

Ein Grundgedanke der Erfindung besteht darin, anhand vorhandener Umgebungsdaten charakteristische Merkmale bestimmter Landmarkentypen zu ermitteln. Wenn beispielsweise kein Detektormodul zum Detektieren des ersten Landmarkentyps vorhanden ist, dann wird bei dem Verfahren bestimmt, wo sich die ersten Landmarken gemäß den Kartendaten relativ zur mobilen Einheit befinden. In diesen Bereichen erfasste Umgebungsdaten werden dann gespeichert und verwendet, um das erste Detektormodul zu erzeugen. Beispielsweise kann ein Detektormodul für Hydranten erzeugt werden, indem anhand der Kartendaten geprüft wird, an welchen Positionen sich Hydranten befinden. Anhand der dort erfassten Umgebungsdaten kann ermittelt werden, wie diese Objekte aussehen und es wird ein entsprechendes Detektormodul erzeugt.

Der Begriff "Landmarken" umfasst im Sinne der Erfindung Merkmale und/oder Muster in einer Umgebung, die identifiziert werden können und denen zumindest eine Ortsinformation zugeordnet werden kann. Dies können beispielsweise charakteristische Punkte oder Objekte sein, die an bestimmten Positionen in der Umgebung angeordnet sind. Die Landmarken können eine Semantik aufweisen, das heißt, sie können als solche auch für die menschliche Wahrnehmung als identifizierbare Objekte oder Merkmale *(Features)* identifizierbar sein. Ferner sind auch Landmarken umfasst, die keine Semantik aufweisen, sondern beispielsweise abstrakte Muster repräsentieren, die durch eine Mustererkennung detektierbar sind.

Den Landmarken können auf an sich bekannte Weise Landmarkentypen zugeordnet werden, insbesondere durch eine Kategorisierung anhand geometrischer Eigenschaften oder anhand einer Semantik, die mit den Landmarken verbunden ist. So können beispielsweise Fahrbahnmarkierungen, Pfosten, Schilder, Bauwerke, Elemente einer Vegetation oder Bauwerke von Verkehrsleitsystemen jeweils als verschiedene Landmarkentypen definiert sein. Ferner können mehrere spezielle Landmarkentypen, etwa "Stoppschilder" und "Parkverbotsschilder", einem allgemeineren oder generischen Landmarkentyp, etwa "Schilder", zugeordnet sein. Insbesondere wird bei dem Verfahren jeder Landmarke zumindest ein Landmarkentyp zugeordnet. Eine konkrete Landmarke kann dabei auch mehreren speziellen und/oder generischen Landmarkentypen zugeordnet sein.

Landmarkentypen können auch etwa Kanten oder andere Teile von Bauwerken, Markierungen auf einer Fahrbahn, Verkehrsführungseinrichtungen oder zweidimensionale Codes sein.

Beispielsweise können Spurmarkierungen, Abbiegepfeile, Parkplatzmarkierungen oder ähnliche Bodenmarkierungen, Pfosten, Stangen, Säulen, Verkehrs- oder andere Schilder, Signalanlagen oder Ampeln, Gebäudekanten oder -ecken, Rohre, QR- oder Barcodes sowie alphanumerische Darstellungen detektiert werden. Analog dazu können weitere Merkmale für eine Lokalisierung verwendet werden, die charakteristische, lokalisierbare Punkte in einer geografischen Umgebung der Eigenposition bezeichnen. Im Allgemeinen handelt es sich um Merkmale, die mittels eines Mustererkennungsverfahrens identifiziert und denen Positionsdaten zugeordnet werden können.

Die Kartendaten umfassen Positionsinformationen für die Landmarken, das heißt Informationen über ihre Lage in einem Koordinatensystem. Es kann sich um ein globales oder relatives Koordinatensystem handeln. Die Positionsdaten betreffen insbesondere Posen der Landmarken, das heißt eine Kombination ihrer Position und ihrer Lage, beschrieben etwa anhand ihrer Ausrichtung in einem globalen Koordinatensystem oder relativ zu anderen Landmarken. Beispielsweise kann ein Pfeil in eine bestimmte Richtung im Raum zeigen, ein Pfosten kann eine bestimmte Länge haben und in einem bestimmten Winkel zu einer Fahrbahn verlaufen oder eine Kante eines Bauwerks kann sich in einer bestimmten Lage relativ zu einer Fahrbahn befinden.

Die Umgebungsdaten werden auf an sich bekannte Weise erfasst. Beispielsweise werden die Umgebungsdaten mittels Sensoren eines Fahrzeugs erfasst, insbesondere mittels optischer, Radar-, Lidar- oder Ultraschallsensoren. Dadurch können vorteilhafterweise vorhandene Einrichtungen des Fahrzeugs genutzt werden, um relevante Umgebungsdaten zu erfassen.

Ferner kann vorgesehen sein, dass Umgebungsdaten mittels einer Schnittstelle von einer externen Einrichtung erfasst werden. Es kann sich dabei beispielsweise um einen fest installierten Sensor zur Verkehrsbeobachtung handeln, der Umgebungsdaten erfasst und bereitstellt. Ferner kann ein externer Server verwendet werden, der relevante Umgebungsdaten empfängt, speichert und bei Bedarf bereitstellt. Solche Umgebungsdaten können etwa von weiteren Fahrzeugen und Einrichtungen entlang einer Fahrstrecke erfasst und an den Server übertragen werden.

Es wird zwischen verschiedenen Typen von Sensoren unterschieden, wobei ein Sensor eines spezifischen Sensortyps Umgebungsdaten nach einem bestimmten physikalischen Messprinzip erfasst. Beispielsweise sind Radarsensoren Sensoren eines ersten Typs und Ultraschallsensoren Sensoren eines weiteren Typs. Zudem kann eine weitere Differenzierung vorgenommen werden, beispielsweise eine Unterscheidung verschiedener Typen von Radarsensoren, die sich beispielsweise in ihrer Bauweise und/oder einer besonderen Art der Datenverarbeitung voneinander unterscheiden.

Landmarken eines bestimmten Landmarkentyps können anhand eines Musters beschrieben werden, welches dazu geeignet ist, eine Landmarke des bestimmten Landmarkentyps in Umgebungsdaten zu detektieren. Die hierzu verwendeten Informationen können etwa eine mathematisch formulierte Beschreibung zur Erkennung eines Musters umfassen, mit welchem eine Landmarke beziehungsweise ein Merkmal der Umgebung in den Signalen eines Sensors abgebildet wird. Es können beispielsweise geometrische Eigenschaften von Objekten eines Landmarkentyps beschrieben werden, aber auch Materialeigenschaften, wie beispielsweise Reflektanzwerte oder mathematische Funktionen, wie etwa Gradienten von Hell-Dunkel-Übergängen.

Solche Beschreibungen zum Detektieren von Landmarken eines Landmarkentyps sind im Allgemeinen sensorspezifisch, sodass sinnvollerweise für die verschiedenen Typen von Sensoren eigene Musterbeschreibungen für die Detektion zur Verfügung gestellt werden können. Beispielsweise unterscheidet sich die Erkennung von Mustern in einem Bild einer optischen Kamera von der Erkennung innerhalb einer Punktwolke, die ein Laserscanner detektiert. Es können allerdings auch generische, für mehrere Sensortypen geeignete Informationen zur Detektion bereitgestellt werden. Ferner können die von einem bestimmten Sensortyp erfassten Daten so verarbeitet werden, dass auf sie das gleiche Detektionsverfahren wie für Daten eines anderen Sensortyps anwendbar ist.

Die Detektion der Landmarken anhand der Umgebungsdaten erfolgt auf an sich bekannte Weise, insbesondere mittels Mustererkennungsverfahren, mittels derer die Landmarken beispielsweise in Kamerabildern oder Laserpunktwolken erkannt werden können. Hierzu werden sogenannte "Detektormodule" verwendet. Dabei handelt es sich im Sinne der Erfindung um Softwaremodule, die beispielsweise eine speicherbare Datei umfassen. Die Detektormodule sind so ausgebildet, dass mit ihrer Hilfe anhand der erfassten Umgebungsdaten Landmarken eines bestimmten Landmarkentyps detektiert werden können. Insbesondere können die Detektormodule spezifisch für die Detektion eines bestimmten Landmarkentyps ausgebildet sein. Es kann vorgesehen sein, dass jeder detektierten Landmarke zumindest ein Landmarkentyp zugeordnet wird.

Bei dem Verfahren sind Detektormodule für bestimmte Landmarkentypen vorhanden. Sie können beispielsweise bei einer Speichereinheit gespeichert sein oder einer Recheneinheit auf andere Weise zur Verfügung stehen. Bei der Erfindung wird das erste Detektormodul erzeugt, etwa weil es zunächst noch nicht vorhanden ist. Das Erzeugen des Detektormoduls kann auch eine Aktualisierung eines vorhandenen Detektormoduls umfassen. Das vorhandene Detektormodul kann dabei durch ein neu erzeugtes Detektormodul ersetzt werden oder es kann verändert werden, beispielsweise indem das bereits vorhandene Detektormodul bei der Erzeugung verwendet wird.

Beim Detektieren einer Landmarke mittels eines Detektormoduls kann bestimmt werden, welchem Landmarkentyp die Landmarke zuzuordnen ist. Ferner können für die detektierten Landmarken Positionsdaten bestimmt werden, wobei insbesondere der Landmarke eine Position oder eine Pose in einem Koordinatensystem zugeordnet wird. Dies kann im Detektionsschritt oder in einem separaten Schritt erfolgen. Die Position oder Pose kann dabei insbesondere in Abhängigkeit von dem zugeordneten Landmarkentyp bestimmt werden, indem für bestimmte Landmarkentypen beispielsweise bestimmte Achsen zum Bestimmen der Lage der Landmarke definiert werden oder indem bestimmte Abschnitte einer Landmarke zur Bestimmung der Position der Landmarke dienen. Zum Beispiel kann die Längsausdehnung eines Postens verwendet werden, um seine Ausdehnung zu bestimmen, oder es kann vorgegeben sein, dass seine Position anhand seiner Position auf der Erdoberfläche bestimmt werden soll. Dabei kann ein globales oder relatives Koordinatensystem verwendet werden, beispielweise ein Relativsystem relativ zu einer Erfassungseinheit oder einem Fahrzeug. Die Position kann sich etwa auf die Positionen anderer detektierter Landmarken beziehen oder auf eine Position des Sensors, anhand von dessen Daten die Detektion durchgeführt wird. Ferner können weitere Merkmale für die detektierten Landmarken bestimmt werden, etwa ihre Größe und Form, Farbe, ein Parameter zum Beschreiben dynamischer Merkmale, oder durch Auswertung einer Beschriftung.

Das bei dem Verfahren anhand der Trainingsdaten erzeuget erste Detektormodul dient dazu, die Detektion für beliebige Landmarken des ersten Landmarkentyps auszuführen und anhand neu erfasster Umgebungsdaten die genannten Informationen für diese beliebigen Landmarken des ersten Landmarkentyps zu bestimmen. Mittels des bei dem Verfahren erzeugten ersten Detektormoduls können auch die ersten Landmarken detektiert werden, für die bei dem Verfahren mit den Kartendaten bereits Positionsinformationen bereitgestellt werden, aber die Detektion ist nicht auf diese konkreten ersten Landmarken beschränkt.

Dabei kann die Detektion von Landmarken eines Landmarkentyps für bestimmte Typen von Sensoren auf spezifische Weise erfolgen, das heißt, es werden Informationen über das entsprechende Muster derart bereitgestellt, dass Landmarken eines Landmarkentyps in den Umgebungsdaten, die von dem spezifischen Sensortyp erfasst wurden, detektiert werden können. Dadurch wird berücksichtigt, dass die Erkennung eines Musters anhand von Umgebungsdaten von der Art des Sensors abhängt, durch den diese Umgebungsdaten erfasst wurden.

Bei dem Verfahren wird ferner eine Position, insbesondere eine Pose, der mobilen Einheit bestimmt. Auch dies kann in einem globalen oder einem relativen Koordinatensystem erfolgen. Die Position wird auf an sich bekannte Weise bestimmt, etwa durch eine landmarkenbasierte Lokalisierung anhand detektierter Landmarken. Hierzu ist erforderlich, dass für diese Landmarken bereits Detektormodule vorhanden sind, die ein Detektierten der Landmarken bestimmter Landmarkentypen in der Umgebung erlauben. Alternativ oder zusätzlich kann ein anderes Positionsbestimmungssystem verwendet werden, etwa unter Nutzung eines globalen Navigationssatellitensystems (GNSS), etwa GPS.

Bei einer Ausbildung des erfindungsgemäßen Verfahrens umfassen die Kartendaten ferner Positionsinformationen für zweite Landmarken eines zweiten Landmarkentyps und mittels eines zweiten Detektormoduls für den zweiten Landmarkentyp werden anhand der Umgebungsdaten die zweiten Landmarken detektiert. Dabei wird die Position beziehungsweise Pose der mobilen Einheit anhand der detektierten zweiten Landmarken bestimmt. Die Position der mobilen Einheit kann dadurch vorteilhafterweise landmarkenbasiert bestimmt werden.

Insbesondere werden beim Detektieren der zweiten Landmarken auch deren Positionen relativ zu der mobilen Einheit bestimmt und die eigene Position der mobilen Einheit wird anschließend anhand eines Abgleichs der Relativpositionen und der Positionsinformationen für die zweiten Landmarken in den Kartendaten erhalten.

Die Position oder Pose wird insbesondere relativ zu einem Koordinatensystem der Kartendaten bestimmt. Dadurch können die erfassten Umgebungsdaten in das Koordinatensystem der Kartendaten transformiert werden oder umgekehrt. Das heißt insbesondere, dass aus den Umgebungsdaten hervorgehende Positionsinformationen Positionen der Kartendaten zugeordnet werden können. Beispielsweise kann eine Landmarke, die in den Umgebungsdaten an einer bestimmten Position detektiert wird, einer bestimmten Position in den Kartendaten zugeordnet werden. Umgekehrt kann anhand einer Position der Kartendaten eine Positionsinformation innerhalb der Umgebungsdaten zugeordnet werden. Das heißt, wenn die Kartendaten eine Information dafür umfassen, dass sich an einer bestimmten Position eine Landmarke befindet, so können entsprechende Umgebungsdaten identifiziert werden, die dieser Position zuzuordnen sind.

Das Verfahren beruht darauf, dass die erfassten Umgebungsdaten Informationen über die ersten Landmarken umfassen, selbst wenn kein geeignetes erstes Detektormodul zur Verfügung steht, um die ersten Landmarken des ersten Landmarkentyps tatsächlich zu detektieren. Anhand der Kartendaten kann insbesondere bestimmt werden, welcher Teil der Umgebungsdaten den ersten Landmarken entspricht. Zum Erzeugen des ersten Detektormoduls werden dann die Umgebungsdaten als Ausgangspunkt eines Trainings für Landmarken des ersten Landmarkentyps verwendet. Anschließend kann das erzeugte Detektormodul beispielsweise für eine landmarkenbasierte Lokalisierung verwendet werden.

Bei einer weiteren Ausbildung werden zu einem späteren Zeitpunkt mittels des ersten Detektormoduls die ersten Landmarken detektiert und die Position der mobilen Einheit wird anhand der detektierten ersten Landmarken bestimmt. Dadurch wird vorteilhafterweise das erzeugte Detektormodul zur eigenen Positionsbestimmung verwendet, beispielsweise um eine genauere Positionsbestimmung zu erreichen.

Insbesondere wird ein *Sliding-Window-Verfahren* verwendet, um anhand der Umgebungsdaten die Landmarken zu detektieren. Dabei werden die erfassten Umgebungsdaten mittels eines "Schiebefensters" gerastert und der Inhalt jedes Feldes des Rasters wird mittels der Detektormodule auf Strukturen untersucht, die zu Landmarken passen.

Das Verfahren wird insbesondere iterativ durchgeführt, wobei das Detektormodul in bestimmten Intervallen aktualisiert werden kann. Ferner kann das erzeugte Detektormodul zur Positionsbestimmung verwendet werden, um weitere, noch nicht vorhandene Detektormodule anhand des Verfahrens neu zu erzeugen.

Bei einer Weiterbildung umfassen die Trainingsdaten eine Teilmenge der erfassten Umgebungsdaten, wobei die Teilmenge anhand der Positionsinformationen über die ersten Landmarken erzeugt wird. Dadurch können die Trainingsdaten vorteilhafterweise besonders zielgerichtet für den ersten Landmarkentyp erzeugt werden.

Insbesondere wird ein Ausschnitt der erfassten Umgebungsdaten zum Erzeugen der Trainingsdaten verwendet, wobei eine Vielzahl von Ausschnitten von Umgebungsdaten verwendet werden kann, die zu unterschiedlichen Zeitpunkten, an unterschiedlichen Orten und zu unterschiedlichen Bedingungen erfasst wurden. Um den Ausschnitt zu definieren, kann eine "*bounding box"* definiert werden, die den Ausschnitt der Umgebungsdaten definiert; beispielsweise können Ausschnitte einer bestimmten Größe und Form verwendet werden.

Dabei wird berücksichtigt, an welchen Positionen sich die Ausschnitte der Umgebungsdaten befinden, und diese werden mit den Positionsinformationen der Kartendaten für die ersten Landmarken abgeglichen. Beispielsweise umfassen die Kartendaten Informationen über die Position einer bestimmten ersten Landmarke und zum Erzeugen der Trainingsdaten wird ein Ausschnitt der Umgebungsdaten verwendet, welcher dieser Position entspricht. Die Trainingsdaten umfassen also Umgebungsdaten, die an den Positionen erfasst wurden, die den Positionen der ersten Landmarken gemäß den Kartendaten entsprechen.

Bei einer Ausbildung umfassen die Kartendaten Zusatzinformationen über Landmarken des ersten Landmarkentyps. Bei einer weiteren Ausbildung werden die Zusatzinformationen von einer anderen Quelle erfasst. Dies erleichtert vorteilhafterweise das Auffinden solcher Landmarken in den Umgebungsdaten.

Solche Zusatzinformationen können beispielsweise eine geeignete *bounding box* betreffen, die zum Ausschneiden der Landmarken aus den Umgebungsdaten oder zur Wahl eines geeigneten Fensters bei dem *Sliding-Window-Verfahren* geeignet ist; beispielsweise können eine ungefähre Form und Größe der Landmarken angegeben werden. Eine solche Größe kann auch beispielsweise als Kreisradius oder anhand der Halbachsen einer Ellipse angegeben werden. Ferner können eine Ausrichtung, eine Farbe und andere Merkmale umfasst sein, die das Erkennen einer Landmarke des ersten Landmarkentyps ermöglichen.

Beispielsweise kann so die Erkennung auf schmale, senkrecht ausgerichtete Strukturen einer bestimmten Größe und Farbe beschränkt werden, was beispielsweise zum Erzeugen eines Detektormoduls für Hydranten bereits einer guten ersten Näherung entspricht. Alternativ oder zusätzlich kann ein Kreisradius angegeben sein, der eine typischerweise von den Landmarken eines Landmarkentyps eingenommene Fläche umschließt.

Bei einer Ausbildung des Verfahrens umfassen die Zusatzinformationen eine Zuordnung des ersten Landmarkentyps zu einem generischen Landmarkentyp. Dies erleichtert vorteilhafterweise das Erzeugen des ersten Detektormoduls

Der generische Landmarkentyp kann beispielsweise eine größere Gruppe von Landmarkentypen umfassen. Wenn ein entsprechendes Detektormodul für den generischen Landmarkentyp bereits vorhanden ist, können die möglichen Kandidaten für den ersten Landmarkentyp bereits auf diese Landmarken eingeschränkt werden. Beim Erzeugen des ersten Detektormoduls wird dann insbesondere bestimmt, welche gemeinsamen Besonderheiten die dem ersten Landmarkentyp zugeordneten Landmarken gegenüber anderen Landmarken des generischen Landmarkentyps aufweisen.

Erfindungsgemäß wird das erste Detektormodul mittels eines Maschinenlernverfahrens erzeugt. Die Erzeugung erfolgt dadurch vorteilhafterweise besonders einfach und schnell. Es können verschiedene, an sich bekannte Verfahren verwendet werden, beispielsweise Verfahren des *Deep Learning,* eine *Support Vector Machine* oder weitere statistische Verfahren. Alternativ oder zusätzlich können weitere Verfahren, insbesondere aus der Bildverarbeitung, verwendet werden.

Bei einer Weiterbildung wird das erste Detektormodul erzeugt, wenn die Trainingsdaten ein Gütekriterium erfüllen. Dies stellt vorteilhafterweise eine ausreichende Qualität des erzeugten ersten Detektormoduls sicher.

Beispielsweise kann ein Schwellenwert festgelegt sein, um zumindest eine bestimmte Anzahl von Ausschnitten der Umgebungsdaten zum Erzeugen des ersten Detektormoduls auszuwerten. Ferner kann die Qualität der Umgebungsdaten, insbesondere für die einzelnen Ausschnitte, quantifiziert und mit einem Schwellenwert verglichen werden, um beispielsweise mit schlechter Erfassungsqualität vorliegende Umgebungsdaten auszuschließen. Ferner kann geprüft werden, ob die Trainingsdaten anhand von Umgebungsdaten erzeugt wurden, die unter bestimmten Erfassungsbedingungen erfasst wurden, beispielsweise bei verschiedenen Positionen, aus verschiedenen Richtungen relativ zu den Landmarken, bei verschiedenen Wetterbedingungen oder bei verschiedenen Lichtverhältnissen oder Tageszeiten. So kann sichergestellt werden, dass ein anhand der Trainingsdaten erzeugtes Detektionsmodul auch in Zukunft zuverlässig zur Detektion geeignet ist.

Erfindungsgemäß wird beim Erzeugen des ersten Detektormoduls eine Korrelation für die Trainingsdaten bestimmt und es wird geprüft, ob die Korrelation einen Schwellenwert übersteigt. Erfindungsgemäß basiert das verwendete Maschinenlernverfahren darauf, von den Trainingsdaten umfasste Ausschnitte der Umgebungsdaten untereinander und/oder mit negativen Beispielen ohne die Landmarken zu vergleichen und Korrelationen zu bestimmen. Hierdurch wird vorteilhafterweise sichergestellt, dass die Erkennung der Landmarken zuverlässig funktioniert.

Insbesondere wird überprüft, ob die Erkennung von Landmarken des ersten Landmarkentyps auch bei negativen Kontrollen zuverlässig ist, das heißt, ob bei Datensätzen von Umgebungsdaten, bei denen der erste Landmarkentyp nicht vorhanden ist, tatsächlich keine Landmarken dieses Typs erkannt werden.

Bei einer weiteren Ausbildung wird das erste Detektormodul durch eine in der mobilen Einheit integrierte Lerneinheit erzeugt. Die Erzeugung erfolgt dabei vorteilhafterweise selbstständig durch die mobile Einheit und ist daher unabhängig von weiteren Einheiten. Insbesondere ist es nicht erforderlich, Informationen an eine weitere Einheit zu übertragen, bei welcher sich beispielsweise eine Problematik in Bezug auf Datenschutzaspekte ergeben kann.

Das erste Detektormodul kann zudem anschließend an eine externe Einheit übertragen werden. Es kann ferner weiteren mobilen Einheiten zur Verfügung gestellt werden, beispielsweise unmittelbar über eine direkte Datenverbindung oder mittelbar durch die Vermittlung eines externen Servers.

Bei einer Weiterbildung werden die Trainingsdaten an eine externe Einheit übertragen. Das erste Detektormodul wird durch die externe Einheit erzeugt und das erste Detektormodul wird an die mobile Einheit übertragen. Das erste Detektormodul kann ferner weiteren Einheiten zur Verfügung gestellt werden. Aufwändige Rechenprozesse können dadurch vorteilhafterweise von der mobilen Einheit weg verlagert werden. Insbesondere sind dabei an sich bekannte Vorkehrungen zum Gewährleisten eines erforderlichen Datenschutzes vorgesehen.

Bei einer weiteren Ausbildung wird anhand der Trainingsdaten eine Ausgabe erzeugt und ein Nutzer wird zur Bestätigung der Trainingsdaten aufgefordert. Dies ermöglicht vorteilhafterweise eine manuelle Kontrolle der Qualität der Trainingsdaten.

Beispielsweise kann die Ausgabe Ausschnitte von Kamerabildern umfassen, die gemäß den Kartendaten den Positionen der ersten Landmarken entsprechen sollen. Der Nutzer kann dann prüfen, ob die ersten Landmarken tatsächlich von den Ausschnitten umfasst sind. Gegebenenfalls können Ausschnitte bestätigt oder verworfen werden.

Das erfindungsgemäße Positionsbestimmungssystem für eine mobile Einheit weist eine Speichereinheit auf zum Bereitstellen von Kartendaten, die Positionsinformationen für erste Landmarken eines ersten Landmarkentyps umfassen. Es umfasst ferner eine Erfassungseinheit zum Erfassen von Umgebungsdaten, eine Lokalisierungseinheit zum Bestimmen einer Position der mobilen Einheit, eine Recheneinheit zum Erzeugen und Speichern von Trainingsdaten anhand der Position der mobilen Einheit, der erfassten Umgebungsdaten und der Positionsinformationen für die ersten Landmarken, und eine Lerneinheit die eingerichtet ist, anhand der Trainingsdaten ein erstes Detektormodul zum Detektieren von Landmarken des ersten Landmarkentyps anhand der erfassten Umgebungsdaten zu erzeugen, wobei das erste Detektormodul mittels eines Maschinenlernverfahrens erzeugt wird.. Dabei wird erfindungsgemäß beim Erzeugen des ersten Detektormoduls eine Korrelation für die Trainingsdaten bestimmt und geprüft, ob die Korrelation einen Schwellenwert übersteigt, wobei das verwendete Maschinenlernverfahren darauf basiert, von den Trainingsdaten umfasste Ausschnitte der Umgebungsdaten untereinander und/oder mit negativen Beispielen ohne die Landmarken zu vergleichen und Korrelationen zu bestimmen.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei der Erfindung werden Landmarken eines bestimmten Typs durch ein bestimmtes Softwaremodul detektiert und die detektierten Instanzen des Landmarkentyps werden anschließend ausgewertet und zur Positionsbestimmung genutzt. Bei dem Verfahren wird ein Detektormodul erzeugt, das verwendet werden kann, um eine im Prinzip beliebig große Zahl verschiedener Landmarken dieses bestimmten Typs zu detektieren. Anhand von weiteren Umgebungsdaten können daher insbesondere auch Landmarken detektiert werden, die im Training nicht erfasst wurden, etwa weil sie neu hinzugefügt wurden oder weil sich die mobile Einheit in einer neuen Umgebung befindet.

Bei einer Ausführung des erfindungsgemäßen Systems umfasst die Erfassungseinheit eine Kamera und/oder einen Lidar-, Radar- und/oder Ultraschallsensor. Somit werden vorteilhafterweise bereits weit verbreitete Sensoren benutzt und das System kann kostengünstig beispielsweise in bestehende Fahrzeuge integriert werden.

Bei einer weiteren Ausbildung wird das erste Detektormodul für einen bestimmten Sensortyp der Erfassungseinheit erzeugt. Die Detektion der ersten Landmarken kann dadurch sensorspezifisch und besonders zuverlässig durchgeführt werden. Das Detektormodul kann ferner gezielt für solche Sensoren erzeugt werden, die besonders gut zur Erfassung von Landmarken des ersten Landmarkentyps geeignet sind.

Dabei wird berücksichtigt, dass je nach dem verwendeten Sensortyp unterschiedlich strukturierte Daten erfasst werden. Dabei können ferner unterschiedliche physikalische Merkmale in der Umgebung der mobilen Einheit detektiert werden. Ein Detektormodul für einen bestimmten Sensortyp umfasst daher insbesondere sensorspezifische Parameter zum Detektieren der Landmarken eines bestimmten Landmarkentyps. Es kann ferner sensorspezifische Muster betreffen, anhand derer Landmarken des bestimmten Landmarkentyps detektierbar sind. Beispielsweise kann ein erzeugtes sensorspezifisches Detektormodul so gebildet sein, dass es die Detektion von Landmarken eines bestimmten Typs anhand von Umgebungsdaten erlaubt, die mittels eines Laserscanners, einer Kamera, einer *Time-of-Flight-Kamera,* eines Radar- oder Lidar-Sensors oder eines Ultraschallsensors erfasst wurden.

Ein Fahrzeug gemäß der Erfindung umfasst ein Positionsbestimmungssystem gemäß der Erfindung.

Die Erfindung wird nun anhand von Ausführungsbeispielen mit Bezug zu den Zeichnungen erläutert.

| | |
|---|---|
| Figur 1 | zeigt ein Fahrzeug mit einem Ausführungsbeispiel des erfindungsgemäßen Positionsbestimmungssystems, |
| Figur 2 | zeigt ein Ausführungsbeispiel einer Umgebung mit verschiedenen Landmarken und |
| Figur 3 | zeigt ein Ausführungsbeispiel des erfindungsgemäßen Verfahrens. |

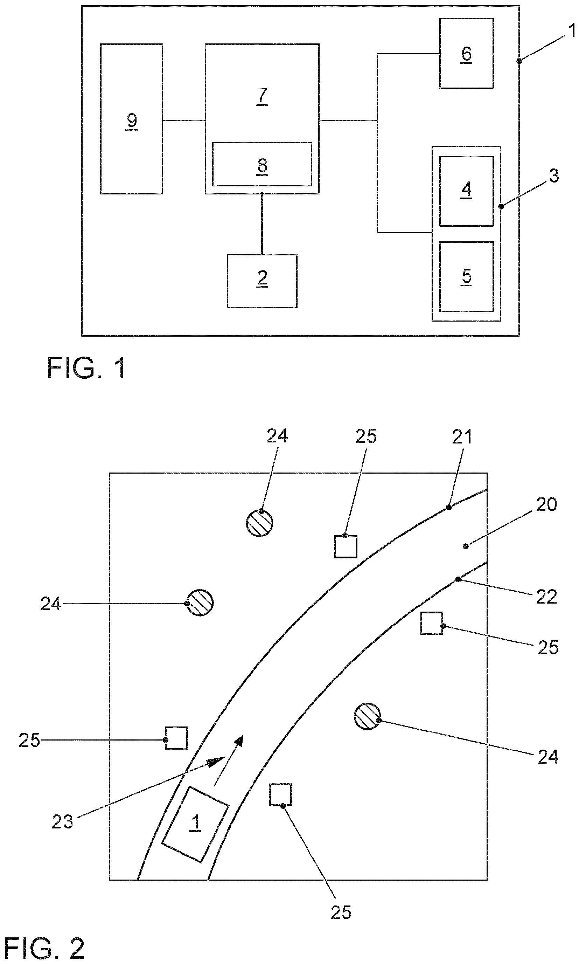

Mit Bezug zu Figur 1 wird ein Fahrzeug mit einem Ausführungsbeispiel des erfindungsgemäßen Positionsbestimmungssystems erläutert.

Das Fahrzeug 1 umfasst eine Erfassungseinheit 3, die wiederum eine Kamera 4 und einen Lidar-Scanner 5 umfasst. Das Fahrzeug umfasst ferner eine Lokalisierungseinheit 6. Die Erfassungseinheit 3 und die Lokalisierungseinheit 6 sind mit einer Recheneinheit 7 verbunden, die eine Lerneinheit 8 umfasst. Mit der Recheneinheit 7 sind ferner ein Touchscreen 9 und eine Speichereinheit 2 verbunden.

Bei dem Ausführungsbeispiel umfasst die Lokalisierungseinheit 6 ein GPS-Modul und ein Modul zum Durchführen einer landmarkenbasierten Positionsbestimmung. Bei weiteren Ausführungsbeispielen können alternativ oder zusätzlich andere Verfahren oder Kombinationen davon verwendet werden.

Bei einem weiteren Ausführungsbeispiel umfasst die Erfassungseinheit 3 andere Arten von Sensoren oder Kombinationen davon. Zum Beispiel kann ein Radar-Scanner, ein Ultraschallsensor oder eine *Time-of-Flight-Kamera* vorgesehen sein. Zudem kann eine Schnittstelle vorgesehen sein, über die von einer fahrzeugexternen Einheit erfasste Daten empfangen werden können.

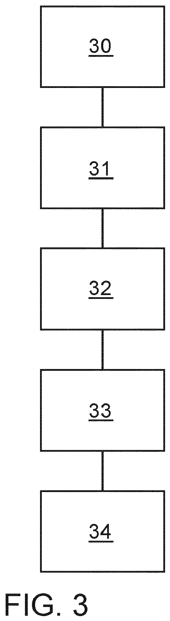

Mit Bezug zu den Figuren 2 und 3 wird ein Ausführungsbeispiel des erfindungsgemäßen Verfahrens erläutert. Dabei wird von dem oben mit Bezug zu Figur 1 erläuterten Ausführungsbeispiel des erfindungsgemäße Systems ausgegangen, welches durch die Beschreibung des Verfahrens weiter spezifiziert wird.

Bei dem in Figur 2 gezeigten Fall befindet sich das Fahrzeug 1 auf einer Straße 20 mit einem linken Fahrbahnrand 21 und einem rechten Fahrbahnrand 22. Die Fahrbahnränder 21, 22 sind bei dem Beispiel durch Fahrbahnmarkierungen gekennzeichnet. In einer Umgebung der Straße 20 befinden sich Leitpfosten 25 sowie Hydranten 24. Das Fahrzeug 1 bewegt sich bei dem Ausführungsbeispiel in Richtung eines Pfeils 23 entlang der Straße 20.

In einem ersten Verfahrensschritt 30 werden Kartendaten erfasst. Diese umfassen Informationen über die Umgebung des Fahrzeugs 1, insbesondere eine Anordnung geografisch beschreibbarer Merkmale oder Muster. Die Kartendaten umfassen bei dem Ausführungsbeispiel Informationen über den Verlauf der Straße 20, die Anordnung und Ausprägung der Markierungen des linken 21 und rechten Fahrbahnrandes 22 sowie über Positionen und Merkmale der Leitpfosten 25. Die Kartendaten umfassen ferner Informationen darüber, zu welchen Kategorien von Landmarken die Landmarken in der Umgebung des Fahrzeugs 1 gehören. Solche Kategorien sind etwa "Leitpfosten" für die Leitpfosten 25 und "Fahrbahnmarkierung" für die Markierungen der Fahrbahnränder 21, 22. Die Kartendaten können ferner weitere Landmarken umfassen, wobei als Landmarken im Allgemeinen Strukturen beschrieben werden können, denen eine Position zugewiesen werden kann und die anhand bestimmter Merkmale, beispielsweise durch eine Mustererkennung, wiedererkannt werden können. Insbesondere sind semantische Landmarken vorgesehen, die als zu einer bestimmten Kategorie gehöriger Ausprägungen erkannt werden können.

Die Kartendaten umfassen ferner Informationen, insbesondere Positionsinformationen, über die Hydranten 24 als Instanzen eines Landmarkentyps "Hydrant". Sie umfassen zudem Zusatzinformationen über die verschiedenen Landmarkentypen. Bei dem Ausführungsbeispiel geben die Zusatzinformationen eine Größenangabe an, die eine *Bounding Box* oder in einer einfacheren Form einen Kreisradius beschreiben, wodurch eine Fläche definiert werden kann, innerhalb derer Landmarken eines bestimmten Typs repräsentiert werden können. Die Zusatzinformationen geben beispielsweise für den Landmarkentyp "Leitpfosten" an, dass dieser im Wesentlichen senkrecht ausgerichtet, schmal und bis zu einer bestimmten Höhe reichend ausgebildet ist. Anhand dieser Informationen kann ein virtueller Rahmen erzeugt werden, der beispielsweise bei einer Detektion von Landmarken zur Rasterung von Umgebungsdaten verwendet werden kann und in dem jeweils die Leitpfosten 25 untergebracht werden können.

Die Zusatzinformationen zu dem Landmarkentyp "Hydrant" umfassen bei dem Ausführungsbeispiel die Informationen, dass es sich um ein längliches, aufrecht vom Boden ausgehendes Objekt handelt, das einen runden Querschnitt und eine rote Farbe aufweist. Insoweit dies lediglich auf eine Teilmenge der tatsächlich vorhandenen Hydranten 24 zutrifft, können die Zusatzinformationen anders ausgebildet sein oder es kann ein weiterer Landmarkentyp für unterschiedliche Klassen von Hydranten 24 vorgesehen sein.

Die von den Kartendaten umfassten Positionsinformationen für die umfassten Landmarken können in verschiedenen Koordinatensystemen angegeben sein. Bei dem Ausführungsbeispiel wird ein globales Koordinatensystem verwendet, wie es beispielsweise bei einer Positionsbestimmung mittels GPS üblich ist. Alternativ oder zusätzlich können die Positionen in einem anderen Koordinatensystem, insbesondere relativ zu einem bestimmten Bezugspunkt, angegeben werden.

In einem zweiten Schritt 31 werden Umgebungsdaten erfasst, was auf an sich bekannte Weise mittels der Erfassungseinheit 3 des Fahrzeugs 1 erfolgt. Dabei werden Sensordaten in einem Erfassungsraum in der Umgebung des Fahrzeugs 1 erfasst, wobei der Erfassungsraum beispielsweise durch eine Sichtweite oder eine Reichweite der Sensoren der Erfassungseinheit 3 bestimmt wird. Werden zudem von fahrzeugexternen Einheiten erfasste Umgebungsdaten empfangen, so kann der Erfassungsraum entsprechend erweitert werden. Bei dem Ausführungsbeispiel wird davon ausgegangen, dass die vom Fahrzeug 1 erfassten Umgebungsdaten Informationen über sämtliche dargestellte Landmarken, das heißt die Fahrbahnränder 21, 22, die Leitpfosten 25 und die Hydranten 24, umfassen.

Die Umgebungsdaten werden so erfasst, dass ihnen räumliche Informationen relativ zu dem Fahrzeug 1 zugeordnet werden können. Beispielsweise entsprechen Bildpunkte von mit der Kamera 4 aufgenommenen Bildern einem bestimmten Raumwinkel relativ zum Fahrzeug 1. Für mittels des Lidar-Scanners 5 erfassten Punktwolken kann ferner für jeden Punkt ein Winkel im Raum relativ zum Fahrzeug 1 sowie eine Entfernung vom Fahrzeug 1 bestimmt werden. Das heißt, die Position eines Objekts, das beispielsweise anhand einer Reflexion an seiner Oberfläche durch die Erfassungseinheit 3 detektiert werden kann, kann anhand der Umgebungsdaten bestimmt werden.

In einem weiteren Schritt 32 wird die Position des Fahrzeugs 1 bestimmt. Bei dem Ausführungsbeispiel erfolgt die Bestimmung der Position im Koordinatensystem der Kartendaten und umfasst ferner eine Ausrichtung des Fahrzeugs 1, das heißt, es wird die Pose des Fahrzeugs 1 im Koordinatensystem der Kartendaten bestimmt. Diese Positionsbestimmung erfolgt auf an sich bekannte Weise mittels der Lokalisierungseinheit 6. Sie basiert auf Daten eines GPS-Moduls und wird durch eine landmarkenbasierte Lokalisierung optimiert. Bei dem Ausführungsbeispiel werden hierzu die vom Fahrzeug 1 erfassten Leitpfosten 25 sowie die Fahrbahnränder 21, 22 verwendet. Bei dem Ausführungsbeispiel wird davon ausgegangen, dass im Fahrzeug 1 die Hydranten 24 nicht in den Umgebungsdaten detektiert werden können, da ein entsprechendes Detektormodul nicht vorhanden ist. Nachfolgend wird ein solches Detektormodul für die Hydranten 24 erzeugt.

Dazu wird in einem Schritt 33 ein Satz von Trainingsdaten erzeugt. Hierzu wird zunächst eine Transformation der Kartendaten in das Koordinatensystem relativ zum Fahrzeug 1 vorgenommen. Dies kann auch umgekehrt erfolgen. Anhand der von den Umgebungsdaten für die Hydranten 24 umfassten Positionsinformationen wird nun bestimmt, in welchen Ausschnitten der erfassten Umgebungsdaten sich die Hydranten 24 befinden. Das heißt, obwohl das Fahrzeug 1 nicht über ein Detektormodul zum Detektieren der Hydranten 24 verfügt, ist dennoch bekannt, welche Teilmengen der Umgebungsdaten jeweils einen Hydranten 24 der Kartendaten umfassen müssen. Es werden daher Ausschnitte der erfassten Umgebungsdaten bestimmt und gespeichert und anhand der Ausschnitte werden Trainingsdaten erzeugt. Bei dem Ausführungsbeispiel wird eine ausreichende Größe und Qualität der Trainingsdaten sichergestellt, indem anhand von Schwellenwerten überprüft wird, ob eine bestimmte Mindestanzahl von Ausschnitten von den Trainingsdaten umfasst sind. Ferner wird die Qualität der Ausschnitte bewertet, beispielsweise mittels quantitativer Verfahren zum Bewerten der Bildqualität. Neben der Anzahl der Ausschnitte wird ferner berücksichtigt, ob diese unter einer bestimmten Mindestanzahl von verschiedenen Umgebungsbedingungen aufgenommen wurden. Beispielsweise wird sichergestellt, dass die von den Trainingsdaten umfassten Ausschnitte zu verschiedenen Tageszeiten und unter verschiedenen Lichtbedingungen erfasst wurden.

Sind diese Bedingungen für die Trainingsdaten erfüllt, so wird in einem weiteren Schritt 34 ein Detektormodul für den Landmarkentyp "Hydranten" erzeugt. Bei dem Ausführungsbeispiel wird hierzu ein Maschinenlernverfahren verwendet, bei dem für die von den Trainingsdaten umfassten Ausschnitte eine Mustererkennung durchgeführt werden und Korrelationen bestimmt werden. Derartige Korrelationen geben insbesondere an, was für gemeinsame Muster in verschiedenen Ausschnitten, die jeweils unterschiedliche Landmarken des Landmarkentyps "Hydrant" umfassen, erkannt werden. Durch das Maschinenlernverfahren wird ein Softwaremodul erzeugt, welches als Detektormodul zum Detektieren von Landmarken des Landmarkentyps "Hydrant" anhand der erfassten Umgebungsdaten verwendet werden kann.

Bei einem weiteren Ausführungsbeispiel wird ein bestehendes Detektormodul aktualisiert. Die Trainingsdaten umfassen in diesem Fall auch das bestehende Detektormodul, welches im Anschluss durch ein aktualisiertes Detektormodul ersetzt werden kann.

Das neu erzeugte Detektormodul wird gespeichert und kann in einem nächsten Schritt zum Durchführen einer landmarkenbasierten Lokalisierung genutzt werden. Bei einem weiteren Ausführungsbeispiel kann das Detektormodul an eine externe Einheit übertragen werden, die es anschließend anderen Einheiten, insbesondere anderen Fahrzeugen, zur Verfügung stellt. In weiteren Ausführungsbeispielen kann ferner die Erzeugung des neuen Detektormoduls durch die externe Einheit erfolgen, wobei hierzu die Trainingsdaten oder die Ausschnitte der erfassten Umgebungsdaten zum Erzeugen von Trainingsdaten an die externe Einheit übertragen werden. Insbesondere rechenaufwändige Verfahren des Maschinenlernens können hierdurch aus dem Fahrzeug 1 ausgelagert werden.

Bei einem weiteren Ausführungsbeispiel wird beim Erzeugen der Trainingsdaten eine Ausgabe erzeugt, bei der von einem Nutzer die Überprüfung der gewählten Ausschnitte der Umgebungsdaten angefordert wird. Beispielsweise werden die Ausschnitte auf dem Touchscreen 9 des Fahrzeugs 1 angezeigt und der Nutzer kann entscheiden, ob ein Ausschnitt zum Training verwendet werden soll oder ob er stattdessen verworfen werden soll, beispielsweise weil keine Landmarke des gewünschten Landmarkentyps in dem Ausschnitt erkennbar ist oder weil keine ausreichende Qualität der Umgebungsdaten vorliegt.

Bei einem weiteren Ausführungsbeispiel umfassen die Zusatzinformationen der Kartendaten über den Landmarkentyp "Hydrant" eine Zuordnung zu dem generischen Landmarkentyp "längliche Strukturen". Wenn das Fahrzeug 1 bereits über ein Detektormodul für Landmarken dieses Typs verfügt, so kann dieses genutzt werden, um geeignete Ausschnitte der Umgebungsdaten gezielter zu bestimmen. Diese Informationen und gegebenenfalls ein bereits existierendes Detektormodul können ferner zur Erzeugung des neuen Detektormoduls für die Hydranten genutzt werden.

### Bezugszeichenliste

- 1: Mobile Einheit; Fahrzeug
- 2: Speichereinheit
- 3: Erfassungseinheit
- 4: Kamera
- 5: Lidar-Scanner
- 6: Lokalisierungseinheit
- 7: Recheneinheit
- 8: Lerneinheit
- 9: Touchscreen
- 20: Straße
- 21: Fahrbahnrand links
- 22: Fahrbahnrand rechts
- 23: Pfeil
- 24: Erste Landmarken; Hydrant
- 25: Zweite Landmarken; Leitpfosten
- 30: Bereitstellen von Kartendaten
- 31: Erfassen von Umgebungsdaten
- 32: Bestimmen einer Position
- 33: Erzeugen von Trainingsdaten
- 34: Erzeugen eines Detektormoduls

## Patentansprüche

1. Verfahren zum Betreiben eines Positionsbestimmungssystems für eine mobile Einheit (1); bei dem
Kartendaten bereitgestellt werden, die Positionsinformationen für erste Landmarken (24) eines ersten Landmarkentyps umfassen;
Umgebungsdaten erfasst werden;
eine Position der mobilen Einheit (1) bestimmt wird;
anhand der Position der mobilen Einheit (1), der erfassten Umgebungsdaten und der Positionsinformationen für die ersten Landmarken (24) Trainingsdaten erzeugt und gespeichert werden;
anhand der Trainingsdaten ein erstes Detektormodul zum Detektieren von Landmarken des ersten Landmarkentyps anhand der erfassten Umgebungsdaten erzeugt wird,
wobei das erste Detektormodul mittels eines Maschinenlernverfahrens erzeugt wird, **dadurch gekennzeichnet, dass**
beim Erzeugen des ersten Detektormoduls eine Korrelation für die Trainingsdaten bestimmt wird und geprüft wird, ob die Korrelation einen Schwellenwert übersteigt,
wobei das verwendete Maschinenlernverfahren darauf basiert, von den Trainingsdaten umfasste Ausschnitte der Umgebungsdaten untereinander und/oder mit negativen Beispielen ohne die Landmarken zu vergleichen und Korrelationen zu bestimmen.

2. Verfahren gemäß Anspruch 1,
**dadurch gekennzeichnet, dass**
die Kartendaten ferner Positionsinformationen für zweite Landmarken (25) eines zweiten Landmarkentyps umfassen; und
mittels eines zweiten Detektormoduls für den zweiten Landmarkentyp anhand der Umgebungsdaten die zweiten Landmarken (25) detektiert werden; wobei
die Position der mobilen Einheit (1) anhand der detektierten zweiten Landmarken (25) bestimmt wird.

3. Verfahren gemäß einem der vorhergehenden Ansprüche,
**dadurch gekennzeichnet, dass**
zu einem späteren Zeitpunkt mittels des ersten Detektormoduls die ersten Landmarken (24) detektiert werden; und
die Position der mobilen Einheit (1) anhand der detektierten ersten Landmarken (24) bestimmt wird.

4. Verfahren gemäß einem der vorhergehenden Ansprüche,
**dadurch gekennzeichnet, dass**
die Kartendaten Zusatzinformationen über Landmarken des ersten Landmarkentyps umfassen.

5. Verfahren gemäß Anspruch 4,
**dadurch gekennzeichnet, dass**
die Zusatzinformationen eine Zuordnung des ersten Landmarkentyps zu einem generischen Landmarkentyp umfassen.

6. Verfahren gemäß einem der Ansprüche 1 bis 5,
**dadurch gekennzeichnet, dass**
das erste Detektormodul erzeugt wird, wenn die Trainingsdaten ein Gütekriterium erfüllen, wobei ein Schwellenwert festgelegt ist, anhand dessen überprüft wird, ob eine Mindestanzahl von Ausschnitten von den Trainingsdaten umfasst sind.

7. Verfahren gemäß einem der vorhergehenden Ansprüche,
**dadurch gekennzeichnet, dass**
das erste Detektormodul durch eine in der mobilen Einheit (1) integrierte Lerneinheit (8) erzeugt wird.

8. Verfahren gemäß einem der Ansprüche 1 bis 7,
**dadurch gekennzeichnet, dass**
die Trainingsdaten an eine externe Einheit übertragen werden;
das erste Detektormodul durch die externe Einheit erzeugt wird; und
das erste Detektormodul an die mobile Einheit (1) übertragen wird.

9. Verfahren gemäß einem der vorhergehenden Ansprüche,
**dadurch gekennzeichnet, dass**
anhand der Trainingsdaten eine Ausgabe erzeugt wird; und
ein Nutzer zur Bestätigung der Trainingsdaten aufgefordert wird.

10. Positionsbestimmungssystem für eine mobile Einheit (1), umfassend
eine Speichereinheit (2) zum Bereitstellen von Kartendaten, die Positionsinformationen für erste Landmarken (24) eines ersten Landmarkentyps umfassen;
eine Erfassungseinheit (3) zum Erfassen von Umgebungsdaten;
eine Lokalisierungseinheit (6) zum Bestimmen einer Position der mobilen Einheit (1);
eine Recheneinheit (7) zum Erzeugen und Speichern von Trainingsdaten anhand der Position der mobilen Einheit (1), der erfassten Umgebungsdaten und der Positionsinformationen für die ersten Landmarken (24); und
eine Lerneinheit (8), die eingerichtet ist, anhand der Trainingsdaten ein erstes Detektormodul zum Detektieren von Landmarken des ersten Landmarkentyps anhand der erfassten Umgebungsdaten zu erzeugen,
wobei das erste Detektormodul mittels eines Maschinenlernverfahrens erzeugt wird,
**dadurch gekennzeichnet, dass**
beim Erzeugen des ersten Detektormoduls eine Korrelation für die Trainingsdaten bestimmt wird und geprüft wird, ob die Korrelation einen Schwellenwert übersteigt,
wobei das verwendete Maschinenlernverfahren darauf basiert, von den Trainingsdaten umfasste Ausschnitte der Umgebungsdaten untereinander und/oder mit negativen Beispielen ohne die Landmarken zu vergleichen und Korrelationen zu bestimmen.

11. Positionsbestimmungssystem gemäß Anspruch 10,
**dadurch gekennzeichnet, dass**
die Erfassungseinheit (3) eine Kamera (4) oder einen Lidar- (5), Radar- und/oder Ultraschallsensor umfasst.

12. Positionsbestimmungssystem gemäß Anspruch 10 oder 11,
**dadurch gekennzeichnet, dass**
das erste Detektormodul für einen bestimmten Sensortyp der Erfassungseinheit (3) erzeugt wird.

## Claims

1. Method for operating a position determination system for a mobile unit (1); in which
map data are provided, which comprise position information for first landmarks (24) of a first landmark type;
environment data are collected;
a position of the mobile unit (1) is determined; training data are generated and stored based on the position of the mobile unit (1), the collected environment data and the position information for the first landmarks (24);
on the basis of the training data, a first detector module for detecting landmarks of the first landmark type on the basis of the collected environment data is generated,
wherein the first detector module is generated by means of a machine learning method,
**characterized in that**
when generating the first detector module, a correlation is determined for the training data and it is tested whether the correlation exceeds a threshold value,
wherein the machine learning method used is based on comparing portions of the environment data comprised by the training data with each other and/or with negative examples without the landmarks, and determining correlations.

2. Method according to Claim 1,
**characterized in that**
the map data also comprise position information for second landmarks (25) of a second landmark type; and
the second landmarks (25) are detected by means of a second detector module for the second landmark type on the basis of the environment data; wherein
the position of the mobile unit (1) is determined on the basis of the detected second landmarks (25).

3. Method according to any one of the preceding claims, **characterized in that**
at a later point in time the first landmarks (24) are detected by means of the first detector module; and
the position of the mobile unit (1) is determined on the basis of the detected first landmarks (24).

4. Method according to any one of the preceding claims, **characterized in that**
the map data comprise additional information about landmarks of the first landmark type.

5. Method according to Claim 4,
**characterized in that**
the additional information comprises a mapping of the first landmark type to a generic landmark type.

6. Method according to any one of Claims 1 to 5, **characterized in that**
the first detector module is generated if the training data satisfy a quality criterion, wherein a threshold value is established and is used to check whether a minimum number of portions are comprised by the training data.

7. Method according to any one of the preceding claims, **characterized in that**
the first detector module is generated by a learning unit (8) integrated in the mobile unit (1).

8. Method according to any one of Claims 1 to 7, **characterized in that**
the training data are transmitted to an external unit;
the first detector module is generated by the external unit; and
the first detector module is transmitted to the mobile unit (1).

9. Method according to any one of the preceding claims, **characterized in that**
an output is generated on the basis of the training data; and
a user is prompted to confirm the training data.

10. Position determination system for a mobile unit (1), comprising
a memory unit (2) for providing map data, which comprise position information for first landmarks (24) of a first landmark type;
a collection unit (3) for collecting environment data;
a localization unit (6) for determining a position of the mobile unit (1);
a processing unit (7) for generating and storing training data based on the position of the mobile unit (1), the collected environment data and the position information for the first landmarks (24); and
a learning unit (8) configured to generate a first detector module for detecting landmarks of the first landmark type on the basis of the collected environment data,
wherein the first detector module is generated by means of a machine learning method,
**characterized in that**
when generating the first detector module, a correlation is determined for the training data and it is tested whether the correlation exceeds a threshold value,
wherein the machine learning method used is based on comparing portions of the environment data comprised by the training data with each other and/or with negative examples without the landmarks, and determining correlations.

11. Position determination system according to Claim 10, **characterized in that**
the collection unit (3) comprises a camera (4) or a lidar (5), radar and/or ultrasonic sensor.

12. Position determination system according to Claim 10 or 11,
**characterized in that**
the first detector module is generated for a specific sensor type of the collection unit (3).

## Revendications

1. Procédé pour faire fonctionner un système de détermination de position pour une unité mobile (1) ; avec lequel
des données cartographiques sont fournies, lesquelles comprennent des informations de position pour des premiers points de repère (24) d'un premier type de point de repère ;
des données d'environnement étant acquises ;
une position de l'unité mobile (1) étant déterminée ; des données d'entraînement étant générées et mémorisées à l'aide de la position de l'unité mobile (1), des données d'environnement acquises et des informations de position pour les premiers points de repère (24) ;
un premier module détecteur servant à détecter des points de repère du premier type de point de repère à l'aide des données d'environnement acquises étant généré à l'aide des données d'entraînement,
le premier module détecteur étant généré au moyen d'un procédé d'apprentissage automatique,
**caractérisé en ce que**
lors de la génération du premier module détecteur, une corrélation pour les données d'entraînement est déterminée et un contrôle est effectué afin de vérifier si la corrélation dépasse une valeur de seuil,
le procédé d'apprentissage automatique utilisé se basant sur la comparaison entre elles de portions des données d'entraînement comprises par les données d'entraînement et/ou avec des exemples négatifs sans les points de repère et la détermination de corrélations.

2. Procédé selon la revendication 1,
**caractérisé en ce que**
les données cartographiques comprennent en outre des informations de position pour des deuxièmes points de repère (25) d'un deuxième type de point de repère ; et les deuxièmes points de repère (25) sont détectés au moyen d'un deuxième module détecteur pour le deuxième type de point de repère à l'aide des données d'environnement ;
la position de l'unité mobile (1) étant déterminée à l'aide des deuxièmes points de repère (25) détectés.

3. Procédé selon l'une des revendications précédentes, **caractérisé en ce que**
les premiers points de repère (24) sont détectés à un moment ultérieur au moyen du premier module détecteur ; et
la position de l'unité mobile (1) est déterminée à l'aide des premiers points de repère (24) détectés.

4. Procédé selon l'une des revendications précédentes, **caractérisé en ce que** les données cartographiques comprennent des informations supplémentaires à propos des points de repère du premier type de point de repère.

5. Procédé selon la revendication 4, **caractérisé en ce que** les informations supplémentaires comprennent une association du premier type de point de repère à un type de point de repère générique.

6. Procédé selon l'une des revendications 1 à 5, **caractérisé en ce que** le premier module détecteur est généré lorsque les données d'entraînement satisfont un critère de qualité, une valeur de seuil étant fixée, à l'aide de laquelle un contrôle est effectué afin de vérifier si un nombre minimal de portions est compris par les données d'entraînement.

7. Procédé selon l'une des revendications précédentes, **caractérisé en ce que** le premier module détecteur est généré par une unité d'apprentissage (8) intégrée dans l'unité mobile (1).

8. Procédé selon l'une des revendications 1 à 7, **caractérisé en ce que**
les données d'entraînement sont transmises à une unité externe ;
le premier module détecteur est généré par l'unité externe ; et
le premier module détecteur est transmis à l'unité mobile (1) .

9. Procédé selon l'une des revendications précédentes, **caractérisé en ce que**
une sortie est générée à l'aide des données d'entraînement ; et
un utilisateur est invité à confirmer les données d'entraînement.

10. Système de détermination de position pour une unité mobile (1), comprenant
une unité de mémoire (2) destinée à fournir des données cartographiques, lesquelles comprennent des informations de position pour des premiers points de repère (24) d'un premier type de point de repère ;
une unité d'acquisition (3) destinée à acquérir des données d'environnement ;
une unité de localisation (6) destinée à déterminer une position de l'unité mobile (1) ;
une unité de calcul (7) destinée à générer et à mémoriser des données d'entraînement à l'aide de la position de l'unité mobile (1), des données d'environnement acquises et des informations de position pour les premiers points de repère (24) ; et
une unité d'apprentissage (8), qui est conçue pour, à l'aide des données d'entraînement, générer un premier module détecteur servant à détecter des points de repère du premier type de point de repère à l'aide des données d'environnement acquises,
le premier module détecteur étant généré au moyen d'un procédé d'apprentissage automatique,
**caractérisé en ce que**
lors de la génération du premier module détecteur, une corrélation pour les données d'entraînement est déterminée et un contrôle est effectué afin de vérifier si la corrélation dépasse une valeur de seuil,
le procédé d'apprentissage automatique utilisé se basant sur la comparaison entre elles de portions des données d'entraînement comprises par les données d'entraînement et/ou avec des exemples négatifs sans les points de repère et la détermination de corrélations.

11. Système de détermination de position selon la revendication 10, **caractérisé en ce que** l'unité d'acquisition (3) comprend une caméra (4) ou un capteur lidar (5), radar et/ou à ultrasons.

12. Système de détermination de position selon la revendication 10 ou 11, **caractérisé en ce que** le premier module détecteur est généré pour un type de capteur déterminé de l'unité d'acquisition (3).
